# EUROPEAN PATENT APPLICATION

(11) **EP 4 645 652 A1**
(43) Date of publication of application: **05.11.2025**
(21) Application number: 23915342.2
(22) Date of filing: 12.01.2023
(51) Int. Cl.: H02J 50/05, H02J 7/00

(54) **WIRELESS CHARGING DEVICE, ELECTRONIC TERMINAL DEVICE, AND WIRELESS CHARGING SYSTEM**

(71) Applicant: Huawei Digital Power Technologies Co., Ltd., Shenzhen, Guangdong 518043 (CN)
(72) Inventor: LI, Yuechao, Shenzhen, Guangdong 518043 (CN); WANG, Chao, Shenzhen, Guangdong 518043 (CN); WANG, Yong, Shenzhen, Guangdong 518043 (CN); WANG, Zhao, Shenzhen, Guangdong 518043 (CN)
(74) Representative: Gill Jennings & Every LLP
(86) International application number: PCT/CN2023/071929
(87) International publication number: WO 2024/148572

(57) **Abstract**

This application provides a wireless charging device, an electronic terminal device, and a wireless charging system. The wireless charging device includes an alternating current excitation source and a transmitting electrode plate. The alternating current excitation source is configured to output alternating electric energy. The transmitting electrode plate is electrically connected to the alternating current excitation source, and is thermally isolated from the alternating current excitation source. The transmitting electrode plate is configured to form an alternating electric field coupling path with a receiving electrode plate of the electronic terminal device. The alternating current excitation source is configured to transmit the alternating electric energy to the electronic terminal device through the alternating electric field coupling path. Based on this design, light and thin designs of structures of the wireless charging device, the electronic terminal device, and the wireless charging system in this application can be implemented, heat generated by a coupling mechanism is effectively reduced, and then heat emitted by the electronic terminal device is reduced. This can help improve a wireless charging speed of the electronic terminal device, and further improve wireless charging experience.

## Description

### TECHNICAL FIELD

This application relates to the field of wireless power transmission technologies, and in particular, to a wireless charging device, an electronic terminal device, and a wireless charging system.

### BACKGROUND

Wireless power transmission (Wireless Power Transmission, WPT) is a technology for implementing power transmission in a non-physical contact manner. Currently, a consumer terminal device has widely used the WPT technology that is based on a magnetic field coupling principle to implement wireless charging, and develops toward a direction of a higher charging rate and a lighter and thinner structure.

However, due to the magnetic field coupling principle, it is difficult to further reduce a size of a coupling coil. In addition, due to existence of an alternating magnetic field, an eddy-current loss is inevitably generated on a metal component of the terminal device. As a result, the terminal device is prone to triggering overheating protection during high-power charging, thereby limiting an increase in a charging speed. It is clear that the two problems limit further improvement in wireless charging experience of the terminal device.

### SUMMARY

In view of this, this application provides a wireless charging device, an electronic terminal device, and a wireless charging system, so that light and thin designs of the wireless charging device and the electronic terminal device can be implemented, heat generated by a coupling mechanism can be effectively reduced, and then heat emitted by the electronic terminal device is reduced. This can help improve a wireless charging speed of the electronic terminal device, and further improve wireless charging experience.

According to a first aspect, this application provides a wireless charging device, including an alternating current excitation source and a transmitting electrode plate. The alternating current excitation source is configured to output alternating electric energy. The transmitting electrode plate is electrically connected to the alternating current excitation source, and is thermally isolated from the alternating current excitation source. The transmitting electrode plate is configured to form an alternating electric field coupling path with a receiving electrode plate of an electronic terminal device. The alternating current excitation source may be configured to transmit the alternating electric energy to the electronic terminal device through the alternating electric field coupling path, to wirelessly charge the electronic terminal device.

In this application, an electrode plate having a light, thin, and simple structure is used as a coupling mechanism instead of a coil, and wireless charging is implemented in an electric field coupling manner instead of in a magnetic field coupling manner. In this way, a problem that light and thin designs of the wireless charging device and the electronic terminal device cannot be implemented because a size of the coil cannot be reduced can be resolved. In addition, because no coil is disposed in the wireless charging device and the electronic terminal device, generation of an eddy-current loss can be essentially suppressed. In addition, a conduction loss of the electrode plate can be reduced to be negligible. Therefore, heat generated by the coupling mechanism in this application can be greatly reduced, and temperature rise of the electronic terminal device is suppressed. In addition, in this application, a thermal isolation measure is further introduced to the wireless charging device to prevent heat of the alternating current excitation source from being transferred to the electronic terminal device, thereby further slowing down temperature rise of the electronic terminal device. Based on this design, a wireless charging speed of the electronic terminal device is improved, and wireless charging experience is further improved.

In a possible design, there are a plurality of transmitting electrode plates, and the plurality of transmitting electrode plates are disposed in pairs. Transmitting electrode plates in a same pair are respectively and correspondingly connected to a first output end and a second output end of the alternating current excitation source, to access the alternating electric energy of the alternating current excitation source, and generate the alternating electric field coupling path with the receiving electrode plate.

In a possible design, a plurality of transmitting electrode plates connected to the first output end and a plurality of transmitting electrode plates connected to the second output end are arranged crosswise. Based on this design, because directions of electric field lines carried by two adjacent transmitting electrode plates and two adjacent receiving electrode plates are opposite, an electric field around the two adjacent transmitting electrode plates can be offset by an electric field around the two adjacent receiving electrode plates, so that a leakage electric field around the transmitting electrode plates and the receiving electrode plates is reduced, thereby improving electromagnetic compatibility (Electromagnetic Compatibility, EMC) of the wireless charging device and the electronic terminal device.

In a possible design, a quantity of the transmitting electrode plates is equal to a quantity of receiving electrode plates, and the transmitting electrode plates are in a one-to-one correspondence with the receiving electrode plates. In this way, each transmitting electrode plate and a corresponding receiving electrode plate may be equivalent to a capacitor, so that electric energy can be transmitted through electric field coupling.

In a possible design, distances between the plurality of transmitting electrode plates and the corresponding receiving electrode plates are the same. In this way, the plurality of transmitting electrode plates generate a same electric field strength. This helps stably charge the electronic terminal device.

In a possible design, a thermal resistance material layer is disposed between the alternating current excitation source and the transmitting electrode plates. The alternating current excitation source is thermally isolated from the transmitting electrode plates through the thermal resistance material layer. Based on this design, the thermal resistance material layer may prevent heat of the alternating current excitation source, and heat of the alternating current excitation source transferred to the transmitting electrode plates can be reduced, thereby slowing down temperature rise of the electronic terminal device close to the transmitting electrode plates, and preventing a charging speed of the electronic terminal device from being limited due to temperature rise.

In a possible design, there is a spacing between at least a part of the transmitting electrode plates and the alternating current excitation source. The alternating current excitation source is thermally isolated from the transmitting electrode plates through the spacing. Based on this design, the spacing may prevent heat of the alternating current excitation source from being directly transferred to the transmitting electrode plates, so that temperature rise of the electronic terminal device close to the transmitting electrode plates can be slowed down, and a charging speed of the electronic terminal device is prevented from being limited due to temperature rise.

In a possible design, the wireless charging device further includes a bearing plate. The bearing plate is disposed in an inclined manner relative to the alternating current excitation source. The transmitting electrode plates are mounted on the bearing plate, to be at the spacing from the alternating current excitation source. Based on this design, the electronic terminal device can be stably placed on the bearing plate to be wirelessly charged. In this way, a problem of charging overheating is not easily caused.

In a possible design, the alternating current excitation source and the transmitting electrode plates are respectively connected to two ends that are of a cable and that are disposed opposite to each other. The alternating current excitation source is thermally isolated from the transmitting electrode plates through the cable. Based on this design, the cable may separate the alternating current excitation source from a transmitting electrode plate layer, so that the transmitting electrode plates are away from the alternating current excitation source. In this way, heat of the alternating current excitation source transferred to the transmitting electrode plates can be reduced, thereby slowing down temperature rise of the electronic terminal device close to the transmitting electrode plates, and preventing a charging speed of the electronic terminal device from being limited due to temperature rise.

In a possible design, the wireless charging device further includes a compensation inductor. The compensation inductor is adjacent to the transmitting electrode plates, and is connected in series to the transmitting electrode plates. Based on this design, most of capacitive reactance in the transmitting electrode plates can be offset by inductive reactance in the compensation inductor, so that overall impedance of the transmitting electrode plates is reduced. In this way, when the cable transmits a current of a set magnitude, a voltage borne by the cable can be reduced. Therefore, a voltage stress of the cable can be reduced.

According to a second aspect, this application provides an electronic terminal device. The electronic terminal device is configured to be charged by the wireless charging device according to the first aspect or any possible implementation of the first aspect. The electronic terminal device includes a receiving electrode plate and a load. The receiving electrode plate is configured to form an alternating electric field coupling path with a transmitting electrode plate in the wireless charging device. The load is electrically connected to the receiving electrode plate. The load is configured to obtain alternating electric energy through the alternating electric field coupling path, so that wireless charging is implemented.

In a possible design, the load includes a rectifier circuit and an energy storage battery. The energy storage battery is electrically connected to the receiving electrode plate through the rectifier circuit, to be charged through the rectifier circuit.

According to a third aspect, this application provides a wireless charging system. The wireless power supply system includes a wireless charging device and an electronic terminal device. The wireless charging device is the wireless charging device according to the first aspect or any possible implementation of the first aspect. The electronic terminal device is the electronic terminal device according to the second aspect or any possible implementation of the second aspect. The wireless charging device may be configured to wirelessly charge the electronic terminal device.

In addition, for technical effects brought by any possible implementation of the second to the third aspects, refer to technical effects brought by different implementations of the first aspect. Details are not described herein again.

### BRIEF DESCRIPTION OF DRAWINGS

To describe technical solutions in embodiments of this application more clearly, the following briefly describes accompanying drawings for describing embodiments.
FIG. 1 is a schematic diagram of a wireless charging manner based on a magnetic field coupling principle;
FIG. 2 is a schematic diagram of a wireless charging system according to an embodiment of this application;
FIG. 3 is a schematic diagram of a circuit structure of an alternating current excitation source in FIG. 2;
FIG. 4 is a schematic diagram of a circuit structure of a load in FIG. 2;
FIG. 5 is another schematic diagram of a wireless charging system according to an embodiment of this application;
FIG. 6A to FIG. 6C are schematic diagrams of a wireless charging device according to Embodiment 1 of this application;
FIG. 7A to FIG. 7C are schematic diagrams of a wireless charging device according to Embodiment 2 of this application; and
FIG. 8A and FIG. 8B are schematic diagrams of a wireless charging device according to Embodiment 3 of this application.

**Description of reference signs of main elements**

| | |
|---|---|
| Wireless charging system | 100 |
| Wireless charging device | 10 |
| Alternating current excitation source | 11 |
| AC-AC conversion circuit | 111 |
| Compensation circuit | 112, 221 |
| Controller | 113 |
| Rectifier circuit | 114, 222 |
| Inverter circuit | 115 |
| First output end | 116 |
| Second output end | 117 |
| Transmitting electrode plate | 12 |
| Transmitting electrode plate layer | 13 |
| Thermal resistance material layer | 14 |
| Spacing | 15 |
| Housing | 16 |
| Bearing plate | 17 |
| Limiting structure | 18 |
| Cable | 19 |
| Electronic terminal device | 20 |
| Receiving electrode plate | 21 |
| Load | 22 |
| Energy storage battery | 223 |
| BMS | 224 |
| DC-DC conversion circuit | 225 |
| First input end | 226 |
| Second input end | 227 |
| Receiving electrode plate layer | 23 |
| Magnetic attraction member | 24 |
| Protective housing | 25 |
| Display | 26 |
| Power frequency grid | 30 |
| Direct current power supply | 40 |

The following specific implementations further describe this application in detail with reference to the foregoing accompanying drawings.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application.

It may be understood that a connection relationship described in this application is a direct or indirect connection. For example, a connection between A and B may indicate that A is directly connected to B, or A is indirectly connected to B by using one or more other electrical elements. For example, the connection between A and B may indicate that A is directly connected to C, and C is directly connected to B, so that A is connected to B by using C. It may be further understood that "A is connected to B" described in this application may indicate that A is directly connected to B, or may indicate that A is indirectly connected to B by using one or more other electrical elements.

In the descriptions of this application, the words such as "first" and "second" are merely used to distinguish between different objects, and do not limit a quantity and an execution sequence. In addition, the words such as "first" and "second" do not indicate a definite difference. In addition, terms "include", "have", or any other variant thereof are intended to cover a non-exclusive inclusion.

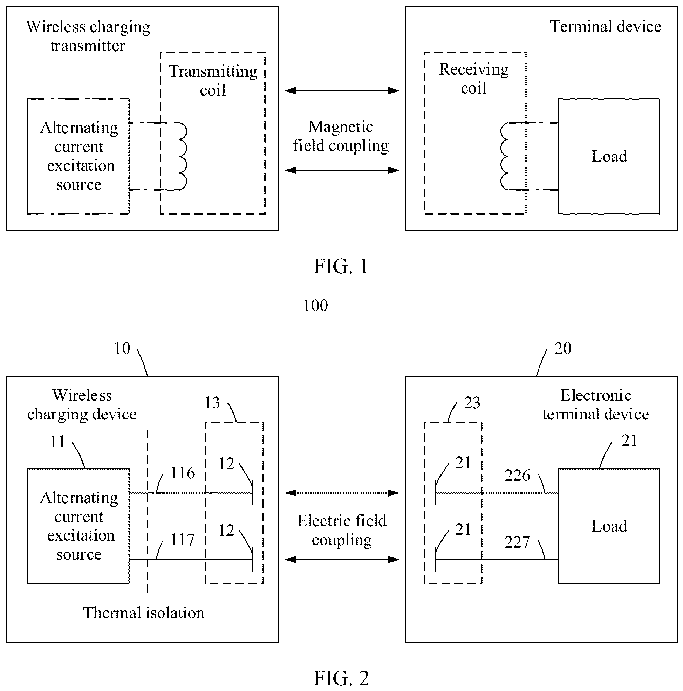

FIG. 1 is a schematic diagram of a wireless charging manner based on a magnetic field coupling principle widely used currently. In FIG. 1, an alternating current (alternating current, AC) power supply at a wireless charging transmitter provides a high-frequency alternating current for a transmitting coil, and the transmitting coil generates a high-frequency alternating magnetic field. The high-frequency alternating magnetic field may enable a receiving coil in a terminal device to generate a corresponding current, so that a load is powered on and stores electric energy. In this way, the electric energy is transferred from the AC power supply to the terminal device.

However, as a coupling mechanism, the transmitting coil and the receiving coil are difficult to be further reduced in size. This is not conducive to light and thin designs of the wireless charging transmitter and the terminal device. In addition, due to existence of the alternating magnetic field, a metal conductor in the terminal device inevitably generates an eddy-current loss. As a result, the terminal device is prone to generating excessive heat during high-power charging, and then triggering overheating protection, thereby limiting an increase in a charging speed.

Therefore, embodiments of this application provide a wireless charging device, an electronic terminal device, and a wireless charging system, so that light and thin designs of structures of the wireless charging device and the electronic terminal device can be implemented, and heat emitted by the wireless charging device is effectively reduced. This improves a wireless charging speed, and improves wireless charging experience.

The technical solutions of this application are further described below in detail with reference to the accompanying drawings.

FIG. 2 is a schematic diagram of a wireless charging system 100 according to an embodiment of this application. As shown in FIG. 2, the wireless charging system 100 includes a wireless charging device 10 and an electronic terminal device 20. The wireless charging device 10 can wirelessly charge the electronic terminal device 20.

The wireless charging device 10 may be used in fields such as electronic communication, a smart wearable, a smart appliance, and medical care.

The electronic terminal device 20 is an electronic product or a smart product corresponding to the wireless charging device 10. For example, the electronic terminal device 20 may be a terminal device including a display 26, such as a mobile phone, a tablet computer, a desktop computer, a laptop computer, a handheld computer, a notebook computer, an ultra-mobile personal computer (ultra-mobile personal computer, UMPC), a netbook, an e-reader, a cellular phone, a personal digital assistant (personal digital assistant, PDA), or an augmented reality (augmented reality, AR)/virtual reality (virtual reality, VR) device. The electronic terminal device 20 may alternatively be an electronic device such as a portable multi-media player (PMP), an MP3 player, a wearable device (such as smart eyeglasses, a head-mounted device (HMD), electronic clothing, a smart watch, a smart band, an electronic necklace, or a headset), a smart home appliance, a mobile medical device, a projector, an electric toothbrush, or a camera.

As shown in FIG. 2, the wireless charging device 10 includes an alternating current (alternating current, AC) excitation source and transmitting electrode plates 12. The transmitting electrode plates 12 are electrically connected to the alternating current excitation source 11. Correspondingly, the electronic terminal device 20 includes receiving electrode plates 21 and a load 22. The receiving electrode plates 21 are electrically connected to the load 22.

During wireless charging, the alternating current excitation source 11 may be configured to provide alternating electric energy (namely, an alternating current) for the transmitting electrode plates 12. The transmitting electrode plates 12 and the receiving electrode plates 21 are disposed opposite to each other. In other words, the transmitting electrode plates 12 squarely face the receiving electrode plates 21. Each transmitting electrode plate 12 is at a set spacing from the corresponding receiving electrode plate 21. In this way, the transmitting electrode plates 12 and the receiving electrode plates 21 are equivalent to a capacitor. Therefore, when the transmitting electrode plates 12 access the alternating electric energy, in other words, when the transmitting electrode plates 12 are powered on, an alternating electric field may be generated between the transmitting electrode plates 12 and the receiving electrode plates 21. Under action of the alternating electric field, charges of the alternating current repeatedly migrate between the transmitting electrode plates 12 and the receiving electrode plates 21, and the charges move to form a current, so that the load 22 obtains the alternating current.

It can be learned that the alternating electric energy of the alternating current excitation source 11 may be transferred to the receiving electrode plates 21 through electric field coupling between the transmitting electrode plates 12 and the receiving electrode plates 21, and then transmitted to the load 22 in the electronic terminal device 20. In this way, the load 22 is wirelessly charged. In this process, the alternating electric energy is converted into alternating electric field energy, and the alternating electric field energy is converted into the alternating electric energy. Because the transmitting electrode plates 12 and the receiving electrode plates 21 form a path through alternating electric field coupling, in this embodiment of this application, the alternating electric field may also be referred to as an alternating electric field coupling path.

It is clear that as another representation form of an electromagnetic force, an electric field is different from a magnetic field. During wireless charging, only the transmitting electrode plates 12 and the receiving electrode plates 21 that have simple, light, and thin structures need to be used as a coupling mechanism. Therefore, in the wireless charging system 100 in this embodiment of this application, light and thin designs of the wireless charging device 10 and the electronic terminal device 20 are easier to implement.

In addition, during implementation of wireless charging through electric field coupling, an alternating magnetic field is not directly generated. When a metal conductor is located around the alternating electric field or in the alternating electric field, the metal conductor does not generate an eddy-current loss, so that generated heat is reduced. It can be learned that the wireless charging system 100 in this embodiment of this application can essentially suppress generation of the eddy-current loss, and resolve a heat emitting problem in a wireless charging process.

In this embodiment of this application, the alternating current excitation source 11 may be any circuit/device that can output an alternating current.

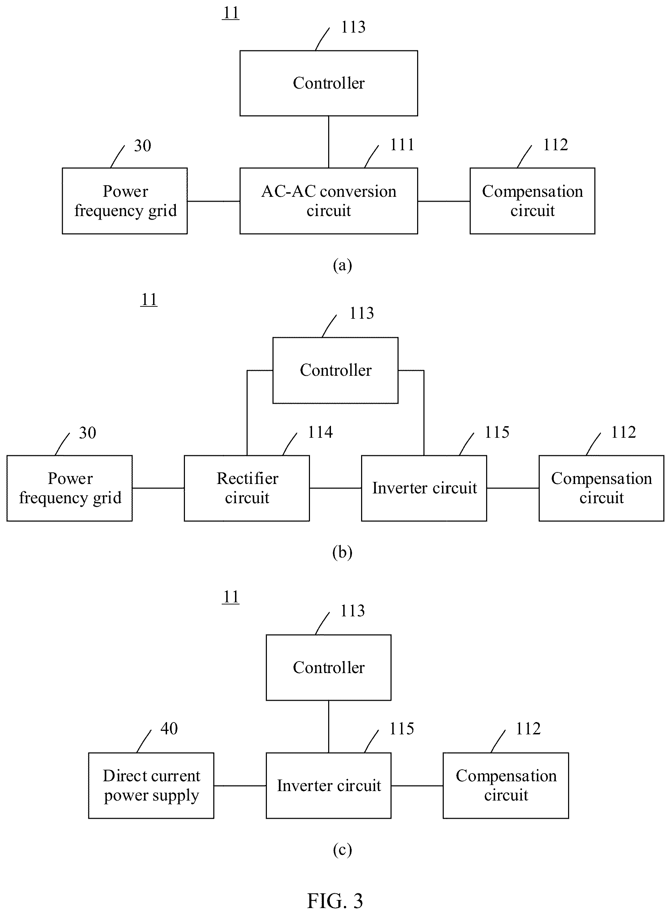

For example, as shown in (a) in FIG. 3, the alternating current excitation source 11 may include an alternating current-alternating current (alternating current-alternating current, AC-AC) conversion circuit 111, a compensation circuit 112, and a controller 113. An input end of the AC-AC conversion circuit 111 may be connected to a power frequency grid 30. An output end of the AC-AC conversion circuit 111 is connected to the transmitting electrode plates 12 through the compensation circuit 112. The AC-AC conversion circuit 111 may be configured to: convert a power frequency alternating current of the power frequency grid 30 into a high-frequency alternating current, and then transmit the high-frequency alternating current to the transmitting electrode plates 12 through the compensation circuit 112. The compensation circuit 112 may include a compensation inductor and a compensation capacitor that are connected to each other, and may improve transmission efficiency.

The controller 113 may include a central processing unit (central processing unit, CPU), another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate, a transistor logic device, or the like. The controller 113 is connected to the AC-AC conversion circuit 111, and may control working of the AC-AC conversion circuit 111.

For another example, as shown in (b) in FIG. 3, the alternating current excitation source 11 may include a rectifier (alternating current-direct current, AC-DC) circuit 114, an inverter (direct current-alternating current, DC-AC) circuit 115, a compensation circuit 112, and a controller 113. An input end of the rectifier circuit 114 may be connected to the power frequency grid 30. The rectifier circuit 114 may be configured to convert a high-frequency alternating current into a direct current. An output end of the rectifier circuit 114 is connected to an input end of the inverter circuit 115. An output end of the inverter circuit 115 is connected to the transmitting electrode plates 12. The inverter circuit 115 may be configured to: convert the direct current into the high-frequency alternating current, and transmit the high-frequency alternating current to the transmitting electrode plates 12 through the compensation circuit 112. The controller 113 is connected to the rectifier circuit 114 and the inverter circuit 115, to control working of the rectifier circuit 114 and the inverter circuit 115.

For still another example, as shown in (c) in FIG. 3, the alternating current excitation source 11 may include an inverter circuit 115, a compensation circuit 112, and a controller 113. An input end of the inverter circuit 115 may be connected to a direct current power supply 40 for outputting a direct current. An output end of the inverter circuit 115 is connected to the transmitting electrode plates 12 through the compensation circuit 112. The controller 113 is connected to the inverter circuit 115, to control working of the inverter circuit 115.

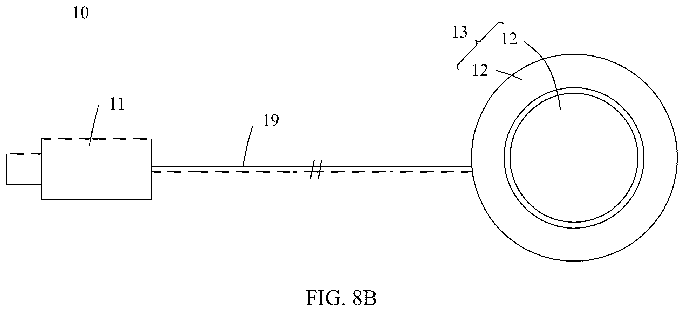

It may be understood that, the input end of the AC-AC conversion circuit 111, the input end of the rectifier circuit 114, and the input end of the inverter circuit 115 may all be set as interfaces, to be connected to a corresponding power supply (such as the power frequency grid 30/the direct current power supply 40) (refer to FIG. 8B). It may be understood that a type of an interface is not limited in this embodiment of this application, for example, may be a universal serial bus (Universal Serial Bus, USB) interface.

In this embodiment of this application, the load 22 may be any element/circuit that needs to use power in the electronic terminal device 20. For example, the load 22 is a battery module in the electronic terminal device 20.

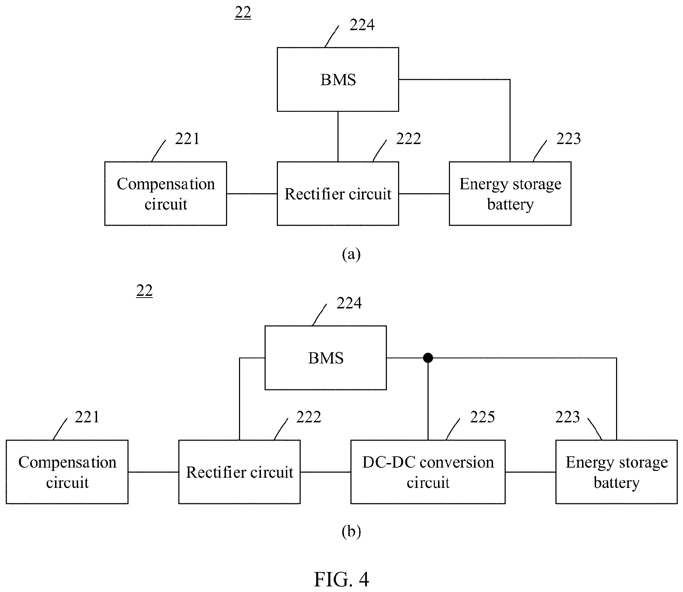

Specifically, as shown in (a) in FIG. 4, the load 22 may include a compensation circuit 221, a rectifier circuit 222, a rechargeable energy storage battery 223, and a battery management system (Battery Management System, BMS) 224. An input end of the rectifier circuit 222 is connected to the receiving electrode plates 21 through the compensation circuit 221. An output end of the rectifier circuit 222 is connected to the energy storage battery 223. The rectifier circuit 222 may be configured to: rectify an alternating current into a direct current, and then transmit the direct current to the energy storage battery 223, so that the energy storage battery 223 is charged and stores energy by using the direct current. The BMS 224 is connected to the rectifier circuit 222 and the energy storage battery 223, and may be configured to: control working of the rectifier circuit 222 and monitor a status of the energy storage battery 223.

For another example, as shown in (b) in FIG. 4, the load 22 may include a compensation circuit 221, a rectifier circuit 222, a direct current-direct current (direct current-direct current, DC-DC) conversion circuit 225, a rechargeable energy storage battery 223, and a BMS 224. The compensation circuit 221, the rectifier circuit 222, and the DC-DC conversion circuit 225 are sequentially connected. The BMS 224 is connected to the rectifier circuit 222, the DC-DC conversion circuit 225, and the energy storage battery 223. Under control of the BMS 224, an output end of the rectifier circuit 222 transmits a direct current to the DC-DC conversion circuit 225, and the DC-DC conversion circuit 225 performs voltage boosting/voltage bucking on the direct current, and then transmits the direct current to the energy storage battery 223. Certainly, in some implementations, the load 22 in FIG. 4 may not be provided with the compensation circuit 221.

In this embodiment of this application, the transmitting electrode plates 12 and the receiving electrode plates 21 may be a circle, a polygon, an arc, a ring, or in another shape. This is not specifically limited herein. It may be understood that the spacing between each transmitting electrode plate 12 and the corresponding receiving electrode plate 21 may be set based on an actual situation (for example, based on a capacity of the capacitor to which the transmitting electrode plates 12 and the receiving electrode plates 21 are equivalent, and an area of a part in which the transmitting electrode plates 12 squarely face the receiving electrode plates 21). This is not specifically limited herein.

It may be understood that a structure of the transmitting electrode plate 12 is not limited in this application. For example, each transmitting electrode plate 12 may include a metal plate and an insulation layer disposed on a surface of the metal plate. A structure of the receiving electrode plate 21 is the same as or similar to that of the transmitting electrode plate 12. Details are not described herein again.

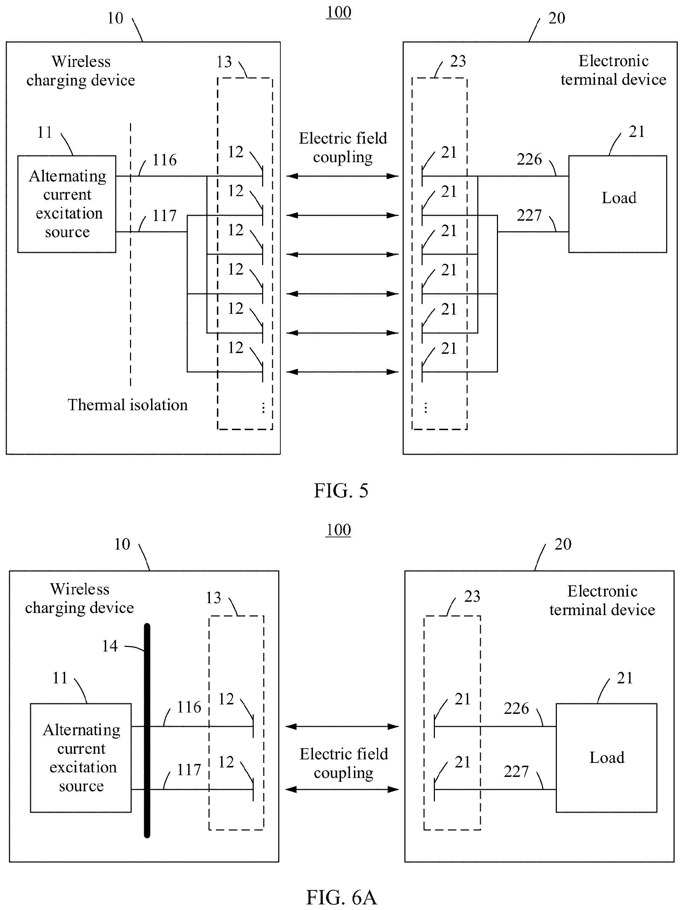

In this embodiment of this application, there are a plurality of transmitting electrode plates 12, and the plurality of transmitting electrode plates 12 are disposed in pairs. In other words, there may be a pair of transmitting electrode plates 12 (refer to FIG. 2) or a plurality of pairs of transmitting electrode plates 12 (refer to FIG. 5). Specifically, the alternating current excitation source 11 has a first output end 116 and a second output end 117. Two transmitting electrode plates 12 in a same pair are separated from each other, and are respectively and correspondingly connected to the first output end 116 and the second output end 117 of the alternating current excitation source 11.

The receiving electrode plates 21 are in a one-to-one correspondence with the transmitting electrode plates 12. Therefore, a quantity of the receiving electrode plates 21 is equal to a quantity of the transmitting electrode plates 12, and the receiving electrode plates 21 are also disposed in pairs. The load 22 has a first input end 226 and a second input end 227. Two receiving electrode plates 21 in a same pair are separated from each other, and are respectively and correspondingly connected to the first input end 226 and the second input end 227 of the load 22.

In this embodiment of this application, still refer to FIG. 2. All the transmitting electrode plates 12 may be integrated into a transmitting electrode plate layer 13. In the transmitting electrode plate layer 13, the plurality of transmitting electrode plates 12 are separated from each other and sequentially arranged in a specified direction (for example, by column). Similarly, all the receiving electrode plates 21 are integrated into a receiving electrode plate layer 23. In the receiving electrode plate layer 23, the plurality of receiving electrode plates 21 are separated from each other and sequentially arranged. When the wireless charging device 10 wirelessly charges the electronic terminal device 20, spacings between different transmitting electrode plates 12 and the corresponding receiving electrode plates 21 are the same.

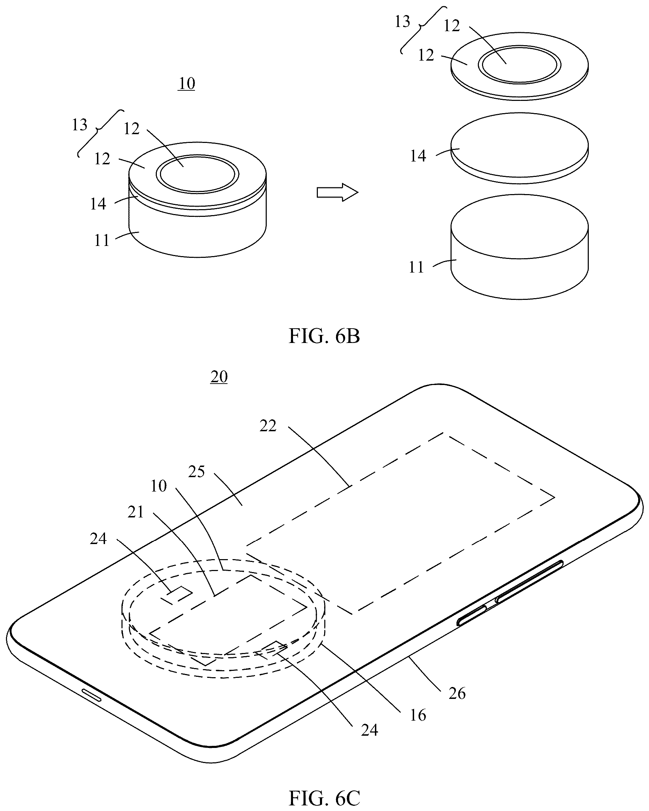

In some embodiments of this application, all the transmitting electrode plates 12 may be set to be concentric and separated from each other, so that the transmitting electrode plates 12 can be more compact. For example, as shown in FIG. 6B, when there is a pair of transmitting electrode plates 12, one of the two transmitting electrode plates 12 is set to be a circle, and the other of the two transmitting electrode plates 12 is set to be a ring. A radius of the annular transmitting electrode plate 12 is greater than a radius of the circular transmitting electrode plate 12, so that the annular transmitting electrode plate 12 may be located in a large radial direction of the circular transmitting electrode plate 12. In other words, the annular transmitting electrode plate 12 may be spaced from and around an outer periphery of the circular transmitting electrode plate 12.

In this embodiment of this application, refer to FIG. 5. When there are a plurality of pairs of transmitting electrode plates 12, the plurality of transmitting electrode plates 12 connected to the first output end 116 and the plurality of transmitting electrode plates 12 connected to the second output end 117 are arranged crosswise. When there are a plurality of pairs of receiving electrode plates 21, the plurality of receiving electrode plates 21 connected to the first input end 226 and the plurality of receiving electrode plates 21 connected to the second input end 227 are also arranged crosswise. Based on this design, directions of electric field lines carried by two adjacent transmitting electrode plates 12 and two adjacent receiving electrode plates 21 are opposite, so that an electric field around the two adjacent transmitting electrode plates 12 can be offset by an electric field around the two adjacent receiving electrode plates 21, and a leakage electric field (that is, an electric field located outside a part in which the transmitting electrode plates 12 squarely face the receiving electrode plates 21) around the transmitting electrode plates 12 and the receiving electrode plates 21 is reduced, thereby improving electromagnetic compatibility (Electromagnetic Compatibility, EMC) of the wireless charging device 10 and the electronic terminal device 20.

As described above, the wireless charging system 100 in this embodiment of this application essentially eliminates the eddy-current loss. Therefore, it may be understood that, for the wireless charging system 100 in this embodiment of this application, a loss mainly occurs in a loss of the conversion circuit and a loss of the compensation circuit 112 in the alternating current excitation source 11. The alternating current excitation source 11 generates heat when a loss occurs. However, during wireless charging, the receiving electrode plates 21 need to be close to and squarely face the transmitting electrode plates 12, so that the heat generated by the alternating current excitation source 11 is easily transferred to the electronic terminal device 20 through the transmitting electrode plates 12.

Therefore, as shown in FIG. 2, in this embodiment of this application, to reduce heat of the alternating current excitation source 11 transferred to the electronic terminal device 20 through the transmitting electrode plates 12, the alternating current excitation source 11 is thermally isolated from the transmitting electrode plates 12. In other words, the alternating current excitation source 11 is isolated from the transmitting electrode plates 12, to prevent heat of the alternating current excitation source 11 from being transferred to the transmitting electrode plates 12.

It may be understood that a specific form of thermal isolation is not limited in this application. For ease of understanding, the wireless charging device 10 is described in detail below by using Embodiment 1 to Embodiment 3. For ease of description, an example in which the electronic terminal device 20 is a mobile phone is used for description.

Refer to FIG. 6A to FIG. 6C. FIG. 6A is a block diagram of a structure of a wireless charging device 10 according to Embodiment 1. FIG. 6B is a schematic diagram of an implementation of the wireless charging device 10 according to Embodiment 1 (a left diagram in FIG. 6B is a combined diagram, and a right diagram in FIG. 6B is an exploded diagram). FIG. 6C is a schematic diagram of wirelessly charging the electronic terminal device 20 (namely, a mobile phone) by using the wireless charging device 10 according to Embodiment 1.

As shown in FIG. 6A, a thermal resistance material layer 14 is disposed between the alternating current excitation source 11 and the transmitting electrode plate layer 13. It may be understood that the thermal resistance material layer 14 may be made of any material that can prevent heat transfer, for example, foamed plastic or a foam plate. A thickness of the thermal resistance material layer 14 may be set based on an actual situation. This is not specifically limited herein.

Specifically, refer to FIG. 6B. The alternating current excitation source 11, the thermal resistance material layer 14, and the transmitting electrode plate layer 13 are sequentially stacked. In other words, the thermal resistance material layer 14 is clamped between the alternating current excitation source 11 and the transmitting electrode plate layer 13, so that one face of the thermal resistance material layer 14 is attached to the alternating current excitation source 11, and the other face of the thermal resistance material layer 14 is attached to the transmitting electrode plate layer 13. Therefore, no spacing is disposed between the alternating current excitation source 11 and the thermal resistance material layer 14, and between the transmitting electrode plate layer 13 and the thermal resistance material layer 14. This can help reduce a size of the wireless charging device 10, and facilitate lightness and thinness of the wireless charging device 10.

As shown in FIG. 6A and FIG. 6B, the thermal resistance material layer 14 covers all areas of a surface that is of the alternating current excitation source 11 and that is configured to connect to the thermal resistance material layer 14, and also covers all areas of a surface that is of the transmitting electrode plate layer 13 and that is configured to connect to the thermal resistance material layer 14. In some implementations, as shown in FIG. 6B, cross-sectional shapes of the thermal resistance material layer 14, the alternating current excitation source 11, and the transmitting electrode plate layer 13 are approximately the same.

A connection line between the alternating current excitation source 11 and the transmitting electrode plate layer 13 may penetrate the thermal resistance material layer 14, to ensure that the alternating current excitation source 11 can still be normally electrically connected to the transmitting electrode plate layer 13. Certainly, the connection line between the alternating current excitation source 11 and the transmitting electrode plate layer 13 may alternatively bypass a thermal resistance material. In other words, the connection line may alternatively be located outside the thermal resistance material. This is not limited herein.

The thermal resistance material layer 14 is fixedly connected to the alternating current excitation source 11 and the transmitting electrode plate layer 13, so that the alternating current excitation source 11 is integrated into a module. It may be understood that a fixed connection manner is not limited herein. For example, the thermal resistance material layer 14 may be fastened between the alternating current excitation source 11 and the transmitting electrode plate layer 13 in a sticking manner. For another example, the thermal resistance material layer 14 may be mechanically connected to the alternating current excitation source 11 and the transmitting electrode plate layer 13 by using a mechanical structure such as a fastener or a mounting accessory such as a screw.

As shown in FIG. 6C, the wireless charging device 10 may further include a housing 16. The alternating current excitation source 11, the thermal resistance material layer 14, and the transmitting electrode plate layer 13 are accommodated in and fastened to the housing 16. It may be understood that the housing 16 may be made of a material such as plastic, glass, ceramic, or a composite material.

Correspondingly, the electronic terminal device 20 (a mobile phone in FIG. 6C) includes a protective housing 25 and a display 26. The display 26 is disposed on one side of the protective housing 25, and is connected to the protective housing 25. Space is formed between the display 26 and the protective housing 25. A circuit element (including the battery module shown in (a) in FIG. 4 or (b) in FIG. 4) of the electronic terminal device 20 may be disposed in the space. The receiving electrode plates 21 are also disposed in the space and are connected to the battery module.

During wireless charging, the electronic terminal device 20 may be placed on the housing 16 of the wireless charging device 10. In this way, each transmitting electrode plate 12 and the corresponding receiving electrode plate 21 may be disposed opposite to each other and remain a stable spacing. It may be understood that, the wireless terminal device and the electronic terminal device 20 may be separately provided with corresponding magnetic attraction members 24, and the electronic terminal device 20 is stably attached to the housing 16 of the wireless charging device 10 through an attraction force between the magnetic attraction members 24 (refer to FIG. 6C), so that relative positions of the receiving electrode plates 21 and the transmitting electrode plates 12 may be fixed, and electric field coupling is stably performed between the receiving electrode plates 21 and the transmitting electrode plates 12. Certainly, a limiting structure 18 may alternatively be disposed on a surface of the housing 16 to stably limit the electronic terminal device 20 on the housing 16 of the wireless charging device 10.

Based on this design, in Embodiment 1, as shown in FIG. 6C, when the wireless charging device 10 wirelessly charges the electronic terminal device 20, the alternating current excitation source 11 may be thermally isolated from the transmitting electrode plates 12 through the thermal resistance material layer 14. In other words, the thermal resistance material layer 14 may prevent heat of the alternating current excitation source 11 from being transferred to the transmitting electrode plates 12, thereby slowing down temperature rise of the electronic terminal device 20 close to the transmitting electrode plates 12, and preventing a charging speed of the electronic terminal device 20 from being limited due to temperature rise.

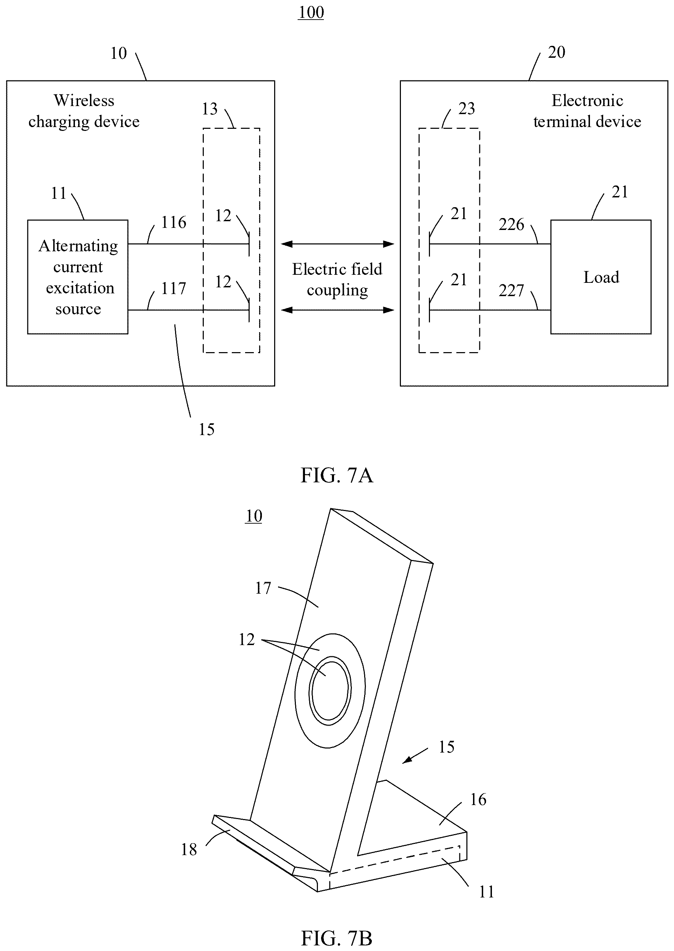

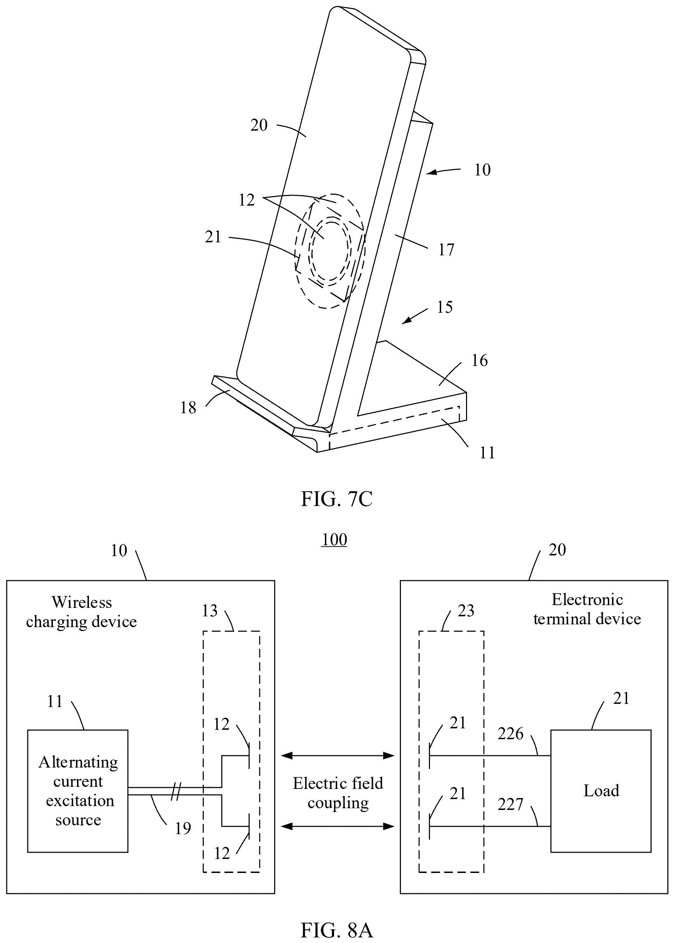

Refer to FIG. 7A to FIG. 7C. FIG. 7A is a block diagram of a structure of a wireless charging device 10 according to Embodiment 2. FIG. 7B is a schematic diagram of an implementation of the wireless charging device 10 according to Embodiment 2. FIG. 7C is a schematic diagram of wirelessly charging the electronic terminal device 20 (namely, a mobile phone) by using the wireless charging device 10 according to Embodiment 2.

As shown in FIG. 7A, the alternating current excitation source 11 is completely separated or partially separated from the transmitting electrode plate layer 13, so that there is a spacing 15 between the alternating current excitation source 11 and the transmitting electrode plate layer 13.

An example in which the alternating current excitation source 11 is partially separated from the transmitting electrode plate layer 13 is used. Specifically, refer to FIG. 7B. The alternating current excitation source 11 is integrated into a module, and is accommodated in a housing 16. The wireless charging device 10 further includes a bearing plate 17. The bearing plate 17 is disposed on the housing 16 in an inclined manner, and the bearing plate 17 and the alternating current excitation source 11 jointly form an included angle. In this way, the bearing plate 17 and the alternating current excitation source 11 jointly form a structure similar to that of a holder of the electronic terminal device 20 (for example, a holder of the mobile phone, refer to FIG. 7C).

It may be understood that the bearing plate 17 and the housing 16 may be made of materials such as plastic, glass, ceramic, or a composite material. The bearing plate 17 and the housing 16 may be disposed integrally, or may be disposed separately. This is not limited herein. It may be understood that a size of the spacing 15 (that is, a size of the included angle) may be set based on an actual situation. This is not specifically limited herein.

The transmitting electrode plates 12 are mounted on the bearing plate 17. It may be understood that a manner of mounting the transmitting electrode plates 12 is not limited in this application. For example, an accommodation groove is concavely disposed on the bearing plate 17. The transmitting electrode plates 12 are embedded in the accommodation groove. A connection line between the transmitting electrode plates 12 and the alternating current excitation source 11 may be routed by using a joint between the bearing plate 17 and the housing 16. For another example, the transmitting electrode plates 12 may alternatively be fastened, in a manner such as sticking or mechanical connection, to a face that is of the bearing plate 17 and that is close to the alternating current excitation source 11.

During wireless charging, the electronic terminal device 20 may be placed on the bearing plate 17 of the wireless charging device 10. In this way, each transmitting electrode plate 12 and the corresponding receiving electrode plate 21 may be disposed opposite to each other and remain a stable spacing. It may be understood that a limiting structure 18 may be disposed on a surface of the bearing plate 17, so that the electronic terminal device 20 is stably disposed on the bearing plate 17 (refer to FIG. 7C), relative positions of the receiving electrode plates 21 and the transmitting electrode plates 12 may be fixed, and electric field coupling is stably performed between the receiving electrode plates 21 and the transmitting electrode plates 12. Certainly, the bearing plate 17 and the electronic terminal device 20 may alternatively be separately provided with corresponding magnetic attraction members, and the electronic terminal device 20 is stably attached to the bearing plate 17 by using an attraction force between the magnetic attraction members.

Based on this design, in Embodiment 2, as shown in FIG. 7C, when the wireless charging device 10 wirelessly charges the electronic terminal device 20, the alternating current excitation source 11 may be thermally isolated from the transmitting electrode plates 12 through the spacing 15. In other words, heat of the alternating current excitation source 11 may be transferred to air in the spacing 15, to implement heat dissipation. The spacing 15 may prevent the heat of the alternating current excitation source 11 from being directly transferred to the transmitting electrode plates 12. In this way, temperature rise of the electronic terminal device 20 close to the transmitting electrode plates 12 can be slowed down, and a charging speed of the electronic terminal device 20 is prevented from being limited due to temperature rise.

Refer to FIG. 8A and FIG. 8B. FIG. 8A is a block diagram of structure of a wireless charging device 10 according to Embodiment 3. FIG. 8B is a schematic diagram of an implementation of the wireless charging device 10 according to Embodiment 3.

As shown in FIG. 8A and FIG. 8B, the alternating current excitation source 11 and the transmitting electrode plate layer 13 are respectively located at two ends that are of a cable 19 and that are disposed opposite to each other. A transmitting electrode plate 12 configured to connect to the first output end 116 of the alternating current excitation source 11 is electrically connected to the first output end 116 through a cable 19, and a transmitting electrode plate 12 configured to connect to the second output end 117 of the alternating current excitation source 11 is electrically connected to the second output end 117 through another cable 19. It may be understood that a length of the cable 19 may be set based on an actual situation. This is not specifically limited herein.

The wireless charging device 10 may further include a housing (not shown in the figure), and the transmitting electrode plate layer 13 is accommodated in and fastened to the housing. During wireless charging, the electronic terminal device 20 may be placed on the housing 16, so that each transmitting electrode plate 12 and the corresponding receiving electrode plate 21 are disposed opposite to each other and remain a stable spacing. It may be understood that, for a material of the housing 16 and a manner of fastening the electronic terminal device 20 to the housing 16, refer to descriptions in Embodiment 1. Details are not described herein again.

Based on this design, in Embodiment 3, when the wireless charging device 10 wirelessly charges the electronic terminal device 20, the alternating current excitation source 11 may be thermally isolated from the transmitting electrode plates 12 through the cable 19. In other words, the cable 19 may separate the alternating current excitation source 11 from the transmitting electrode plate layer 13, so that the transmitting electrode plates 12 are away from the alternating current excitation source 11. In this way, heat of the alternating current excitation source 11 transferred to the transmitting electrode plates 12 can be reduced, thereby slowing down temperature rise of the electronic terminal device 20 close to the transmitting electrode plates 12, and preventing a charging speed of the electronic terminal device 20 from being limited due to temperature rise.

Considering that during working, the transmitting electrode plates 12 are equivalent to a capacitor connected in series to a resistor, and the overall transmitting electrode plates 12 present large impedance, when the cable 19 is directly connected to the transmitting electrode plates 12, and the cable 19 transmits a current of a set magnitude, the cable 19 bears a high voltage. Therefore, in Embodiment 3, in the compensation circuit 112 of the alternating current excitation source 11, a compensation inductor is disposed on one side of the transmitting electrode plates 12 and is connected in series to the transmitting electrode plates 12. In this way, most of capacitive reactance in the transmitting electrode plates 12 is offset by inductive reactance, and overall impedance of the transmitting electrode plates 12 is reduced. In this way, when the cable 19 transmits the current of the set magnitude, the voltage borne by the cable 19 can be reduced. Therefore, a voltage stress of the cable 19 can be reduced.

In conclusion, embodiments of this application provide a wireless charging device 10, an electronic terminal device 20, and a wireless charging system 100. An electrode plate having a light, thin, and simple structure is used as a coupling mechanism instead of a coil whose size cannot be reduced, and wireless charging is implemented in an electric field coupling manner. This resolves a problem that a size of the coupling mechanism cannot be reduced, and implements a light and thin design of a structure. In addition, generation of an eddy-current loss is essentially suppressed, and a conduction loss can also be reduced to be negligible. Therefore, the wireless charging device 10, the electronic terminal device 20, and the wireless charging system 100 in embodiments of this application can greatly reduce heat generated by the coupling mechanism, thereby reducing heat emitted by the electronic terminal device 20. In this way, a charging speed of the electronic terminal device 20 can be prevented from being limited due to temperature rise.

In addition, in embodiments of this application, a heat isolation measure is further introduced to the wireless charging device 10. In this way, heat of the alternating current excitation source 11 can be prevented from being transferred to the electronic terminal device 20, thereby further slowing down temperature rise of the electronic terminal device 20. This can help improve a wireless charging speed of the electronic terminal device 20, so that the electronic terminal device 20 is fast charged, and wireless charging experience is improved.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless charging device, configured to wirelessly charge an electronic terminal device, wherein the electronic terminal device comprises a receiving electrode plate, and the wireless charging device comprises:
an alternating current excitation source, wherein the alternating current excitation source is configured to output alternating electric energy; and
a transmitting electrode plate, wherein the transmitting electrode plate is electrically connected to the alternating current excitation source, and is thermally isolated from the alternating current excitation source, wherein
the transmitting electrode plate is configured to form an alternating electric field coupling path with the receiving electrode plate, and the alternating current excitation source is configured to transmit the alternating electric energy to the electronic terminal device through the alternating electric field coupling path.

2. The wireless charging device according to claim 1, wherein there are a plurality of transmitting electrode plates, and the plurality of transmitting electrode plates are disposed in pairs, wherein transmitting electrode plates in a same pair are respectively and correspondingly connected to a first output end and a second output end of the alternating current excitation source.

3. The wireless charging device according to claim 2, wherein a plurality of transmitting electrode plates connected to the first output end and a plurality of transmitting electrode plates connected to the second output end are arranged crosswise.

4. The wireless charging device according to any one of claims 1 to 3, wherein a quantity of the transmitting electrode plates is equal to a quantity of receiving electrode plates, and the transmitting electrode plates are in a one-to-one correspondence with the receiving electrode plates.

5. The wireless charging device according to claim 4, wherein distances between the plurality of transmitting electrode plates and the corresponding receiving electrode plates are the same.

6. The wireless charging device according to any one of claims 1 to 5, wherein a thermal resistance material layer is disposed between the alternating current excitation source and the transmitting electrode plates, and the alternating current excitation source is thermally isolated from the transmitting electrode plates through the thermal resistance material layer.

7. The wireless charging device according to any one of claims 1 to 5, wherein there is a spacing between at least a part of the transmitting electrode plates and the alternating current excitation source, and the alternating current excitation source is thermally isolated from the transmitting electrode plates through the spacing.

8. The wireless charging device according to any one of claims 1 to 5 and 7, wherein the wireless charging device further comprises a bearing plate, the bearing plate is disposed in an inclined manner relative to the alternating current excitation source, and the transmitting electrode plates are mounted on the bearing plate, to be at the spacing from the alternating current excitation source.

9. The wireless charging device according to any one of claims 1 to 5, wherein the alternating current excitation source and the transmitting electrode plates are respectively connected to two ends that are of a cable and that are disposed opposite to each other, and the alternating current excitation source is thermally isolated from the transmitting electrode plates through the cable.

10. The wireless charging device according to claim 9, wherein the wireless charging device further comprises a compensation inductor; and the compensation inductor is adjacent to the transmitting electrode plates, and is connected in series to the transmitting electrode plates.

11. An electronic terminal device, wherein the electronic terminal device is configured to be charged by the wireless charging device according to any one of claims 1 to 10, and the electronic terminal device comprises:
a receiving electrode plate, wherein the receiving electrode plate is configured to form an alternating electric field coupling path with a transmitting electrode plate in the wireless charging device; and
a load, wherein the load is electrically connected to the receiving electrode plate, and the load is configured to obtain alternating electric energy through the alternating electric field coupling path.

12. The electronic terminal device according to claim 11, wherein the load comprises a rectifier circuit and an energy storage battery, and the energy storage battery is electrically connected to the receiving electrode plate through the rectifier circuit, to be charged through the rectifier circuit.

13. A wireless charging system, wherein the wireless power supply system comprises a wireless charging device and an electronic terminal device, the wireless charging device comprises an alternating current excitation source and a transmitting electrode plate, and the transmitting electrode plate is electrically connected to the alternating current excitation source, and is thermally isolated from the alternating current excitation source; and
the electronic terminal device comprises a receiving electrode plate and a load, and the load is electrically connected to the receiving electrode plate, wherein
the alternating current excitation source is configured to output alternating electric energy; and
the transmitting electrode plate is configured to form an alternating electric field coupling path with the receiving electrode plate, and the alternating current excitation source is configured to transmit the alternating electric energy to the load through the alternating electric field coupling path.
